(19) **Europäisches Patentamt**

**European Patent Office**

**Office européen des brevets**

(11) **EP 1 124 122 A2**

(12) **EUROPÄISCHE PATENTANMELDUNG**

(43) Veröffentlichungstag:
**16.08.2001 Patentblatt 2001/33**

(51) Int Cl.⁷: **G01L 23/08**

(21) Anmeldenummer: **01100765.5**

(22) Anmeldetag: **12.01.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **11.02.2000  DE 10006235**

(71) Anmelder: **SIEMENS AKTIENGESELLSCHAFT**
**80333 München (DE)**

(72) Erfinder:
• **Doemens, Günter, Dr.**
  **83607 Holzkirchen (DE)**
• **Zhang, Hong, Dr.**
  **93105 Tegernheim (DE)**

(54) **Kurbeltriebsensor**

(57)    Der Kurbeltriebsensor weist mindestens einen an einer Schubstange (2) angebrachten Kraftsensor (1) zur Messung einer Stangenkraft (Fp) auf sowie mindestens einen Meßwertübertrager (4), mittels dessen ein Meßsignal des Kraftsensors (1) berührungslos übertragbar ist und einen Winkelgeber (3) zur Bestimmung eines Kurbelwinkels (φ) einer mit der Schubstange (2) verbundenen Kurbel (5).

## FIG 1

**Beschreibung**

Die Erfindung betrifft einen Kurbeltriebsensor und eine Verwendung desselben.

In: Dubbel; Taschenbuch für den Maschinenbau, 18. Aufl., Springer, 1995, S. G 163 bis 168, wird ein allgemeiner Kurbeltrieb beschrieben, z. B. als Triebwerk.

Zur Optimierung des Wirkungsgrades sowie der Laufruhe eines Verbrennungsmotors wird eine zylinderspezifische, sensorische Überwachung des Energieumwandlungsprozesses verstärkt einen wesentlichen Beitrag leisten. Bisher wird versucht, die Messung des Brennraumdrucks in den einzelnen Zylindern als Eingangsgrößen für die Optimierung des Verhaltens des Antriebsstrangs zu nutzen. Eine Langzeitstabilität der Drucksensoren ist jedoch aufgrund der hohen Temperatur im Brennraum kritisch und verlangt kostenintensive Maßnahmen, die eine Verfügbarkeit entsprechender Serienprodukte behindern.

Darüber hinaus wird auch das vom Motor abgegebene Drehmoment eine wichtige Eingangsgröße für eine Überwachung und Steuerung im gesamten Antriebsstrang darstellen. Dazu wird bisher versucht, eine auf der Torsion einer Flexplate basierende Drehmomentmessung als Eingangsgröße zu verwenden, weil das abgegebene Drehmoment nicht mit hinreichender Genauigkeit aus den einzelnen Druckverläufen berechnet werden kann. Die erforderliche direkte Messung an der Flexplate gestaltet sich auch aufgrund der geometrischen bzw. konstruktiven Randbedingungen als aufwendig.

Es ist eine Aufgabe der vorliegenden Erfindung, eine Methode zur Erfassung von Eingangsgrößen bei der Überwachung und Steuerung von Kurbeltrieben zu gewinnen, insbesondere bei einer Brennkraftmaschine und/oder einem davon angetriebenen Antriebsstrang.

Diese Aufgabe wird mittels eines Kurbeltriebsensors nach Patentanspruch 1 und einer Verwendung dieses Sensors nach Patentanspruch 11 gelöst.

Der Kurbeltriebsensor beruht darauf, daß er mindestens einen Kraftsensor zur Messung einer (Schub-)Stangenkraft $F_p$ längs einer Schubstange aufweist, welcher an der Schubstange angebracht ist. Durch die Schubstange wird allgemein eine oszillierende Bewegung eines Kolbens in eine Rotationsbewegung einer Kurbel überführt.

Weiterhin ist ein Winkelgeber vorhanden, durch den ein Kurbelwinkel $\varphi$ der Kurbel bestimmbar ist. Beispielsweise ist ein induktiver oder optischer Winkelgeber einsetzbar. Der Kurbelwinkel $\varphi$ muß vom Winkelgeber nicht direkt gemessen werden, sondern kann auch indirekt durch die Lage anderer mit der Schubstange verbundener Bauteile bestimmt werden.

Zusätzlich ist ein Meßwertübertrager vorhanden, welcher die vom Kraftsensor aufgenommenen Meßwerte berührungslos überträgt. Dies ist notwendig, weil sich die Schubstange in der Regel mit hoher Geschwindigkeit, z. B. 6000 U/min, und hohem Hub, z. B. 50 mm - 80 mm, bewegt. Die von dem Meßwertübertrager ausgesandten Meßsignale werden typischerweise von einem Detektor registriert und, ggf. über eine Auswerteeinheit, weiterbearbeitet.

Durch diesen Kurbeltriebsensor können einfach und zuverlässig verschiedene wichtige Steuergrößen eines Kurbeltriebs erfaßt werden. Insbesondere kann das Drehmoment $M_d$ auf die Kurbel bestimmt werden.

Der Kurbeltriebsensor ist in allgemeinen Schubkurbeln anwendbar, z. B. an einem ein hydraulischen oder piezoelektrischer Antrieb, insbesondere aber an in einem Kurbeltrieb eines Verbrennungsmotors.

Beim Verbrennungsmotor können z. B. bei Kenntnis der Stangenkraft $F_p$ und des Kurbelwinkels $\varphi$ unter anderem folgende Steuergrößen ermittelt werden:

- die tangentiale Kraftkomponente $F_t$ der Stangenkraft $F_p$ an der Kurbel, woraus sich das zylinderspezifische Drehmoment $M_d$ als Produkt aus $F_t$ und Kurbelradius $r$ ergibt,
- die zylinderspezifische Kraft $F_s$ und der Druck $p_B$ = $F_s/A_k$ im Brennraum unter Berücksichtigung der Beschleunigung der Schubstange,
- Momentanes Gesamtmoment,
- zylinderspezifisches Motorverlustmoment (Reibung + Drosselverlust),
- Gesamtmotorverlustmoment,
- Zylinderspezifisches Gasmomentes (indiziertes Moment durch Verbrennung),
- Verlauf des Brennraumdrucks $p_B$ zur Erkennung von Aussetzern, für eine Laufruheregelung, für eine Regelung des Verbrennungsschwerpunkts etc.

Damit sind mittels des Kurbeltriebsensors nahezu alle Steuergrößen direkt ableitbar, welcher aus heutiger Sicht für eine Motorsteuerung von besonderer Bedeutung sind. Beispielsweise kann aus dem Motorverlustmoment die Adaption des Verlustmoment-Modells durchgeführt werden. Aus dem induzierten Moment kann das Momentenmodell adaptiert werden. Aus dem gemessenen Kupplungsmoment kann eine Sicherheitsüberwachung beim EGas-System durchgeführt werden.

An den Kraftsensor muß aufgrund einer typischen hohen Lastwechselzahl (ca. $10^{10}$) auch eine hohe Anforderung an Haltbarkeit und Zuverlässigkeit gestellt werden. Auch sollte der Kraftsensor in der Regel hochtemperaturfest bis ca. 150 °C sein, z. B bei Verwendung in einem Verbrennungsmotor.

Dabei kann sowohl nur ein preiswerter Kraftsensor an der Schubstange angebracht werden als auch ein System von mehreren Kraftsensoren zur erhöhten Genauigkeit und Betriebssicherheit.

Es kann vorteilhaft sein, als Kraftsensor einen Dehnungssensor zu verwenden, wobei aus einer Messung der Dehnung in Längsrichtung der Schubstange in Verbindung mit ihrem Querschnitt und dem Elastizitätsmodul E die Stangenkraft Fp bestimmbar ist. Dabei ist es besonders vorteilhaft, wenn als Dehnungssensor ein aufgedampfter Dehnmeßstreifen verwendet wird, insbesondere ein Hochtemperatur-Dehnmeßstreifen. Auch ist besonders günstig ein piezoresistiver oder kapazitiver Dehnungssensor verwendbar.

Als günstig wird aber auch eine Ausführung eines Kraftsensors als Verformungssensor angesehen, insbesondere als kapazitiv arbeitender Verformungssensor.

Zur verbesserten Zuverlässigkeit und erhöhten Meßgenauigkeit ist es vorteilhaft, wenn der Kraftsensor als Mikrosystem ausgeführt ist, beispielsweise mit einer Ausdehnung in einer Richtung, die kleiner als 500 µm ist, insbesondere kleiner als 100 µm.

Die Energie- bzw. Meßwertübertragung zum und/oder vom Kraftsensor kann nach bekannten Transponderverfahren, z.B. mittels elektromagnetischer Wellen oder induktiver Kopplung, erfolgen. Beispielsweise empfängt der Meßwertübertrager vom Transponder elektromagnetische Wellen, typischerweise im Frequenzbereich von 100 kHz, und nutzt deren Energie zu seinem Betrieb aus. Der Meßwertübertrager wiederum sendet typischerweise 300 Meßwerte pro Sekunde an den Transponder zurück.

Durch den Energieübertrag kann auf einen Energiespeicher am Meßwertübertrager verzichtet werden.

Die Frequenz der vom Meßwertübertrager empfangbaren Signale ist vorteilhafterweise von der Frequenz, auf der der Meßwertübertrager Signale sendet, verschieden, so daß es zu keiner Signalstörung kommt.

Auch kann es vorteilhaft sein, wenn der Meßwertübertrager mit einer autonomen Vorrichtung zur Energieerzeugung ausgestattet ist, z. B. einer mikromechanischen Vorrichtung zur Umwandlung der Beschleunigungskräfte an der Schubstange in eine Spannung, z. B. mittels schwingender Massen. Dadurch reicht ein Empfänger zur Detektion der vom Meßwertübertrager ausgesandten Signale aus.

Es ist weiterhin vorteilhaft, wenn der Meßwertübertrager mit dem Kraftsensor innerhalb eines Bauteils realisiert ist, insbesondere in Mikrosystemtechnik.

Bevorzugt wird ein Meßwertübertrager in Form eines Oberflächenwellen-(OFW-)Bauelementes.

Insbesondere vorteilhaft ist eine Kombination eines kapazitiven Dehnungssensors mit einem Meßwertübertrager in Oberflächenwellen-(OFW-)Technik (Impedanzbelastung), weil dadurch eine Realisierung von Sensor und Meßwertübertrager ohne den Einsatz elektronischer Bauelemente auf der Schubstange realisierbar ist.

Der Kurbeltriebsensor kann zusätzlich eine Auswerteeinheit umfassen, mittels der Meßwerte ausgewertet werden, z. B. Dehnungswerte in Kraftwerte oder Kraftwerte und Winkel in andere Steuergrößen, insbesondere ein Drehmoment Md.

Der Kurbeltriebsensor ist besonders vorteilhaft verwendbar beim Einsatz in einem Verbrennungsmotor, vorzugsweise in einem Kraftfahrzeug. Dabei ist die Schubstange in Form eines Pleuels einerseits mit einem Zylinderkolben drehbar verbunden und andererseits mit einer Kurbelwelle als Teil des Antriebsstrangs.

In den folgenden Ausführungsbeispielen wird der Kurbeltriebsensor schematisch näher dargestellt.

Figur 1   zeigt einen Kurbeltriebsensor an einem Verbrennungsmotor,

Figur 2   zeigt skizzenhaft ein zu Figur 1 korrespondierendes Diagramm der geometrischen Anlage und der korrespondieren Kräfte.

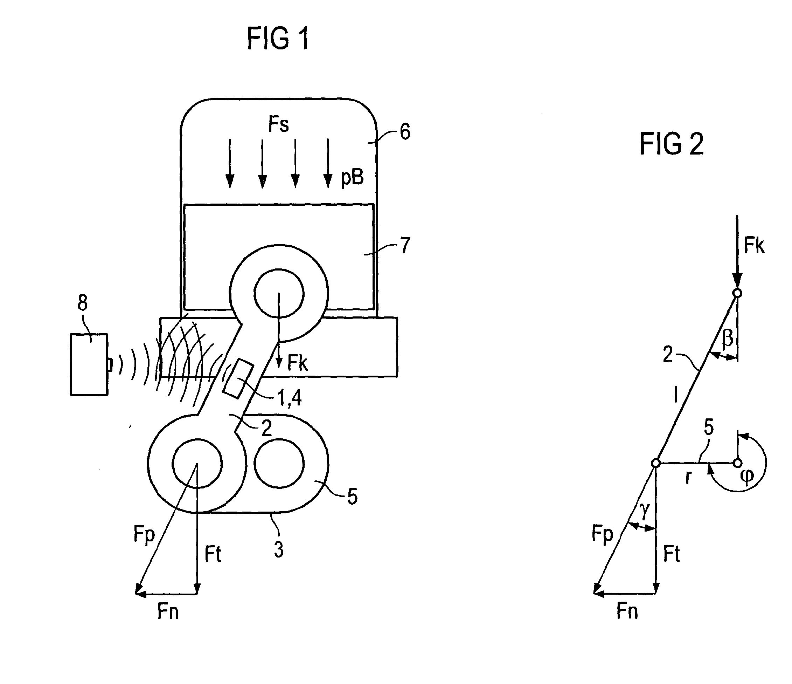

Figur 1 zeigt als Schnittdarstellung in Seitenansicht einen Teil eines Verbrennungsmotors, welcher mit dem Kurbeltriebsensor ausgestattet ist.

In einem Brennraum 6 eines Verbrennungsmotors wird ein Luft/Kraftstoff-Gemisch gezündet, worauf durch den entstehenden Druck pB im Brennraum 6 ein darin axial beweglich angebrachter Zylinderkolben 7 mit einer zylinderspezifischen Kraft Fs nach unten gedrückt wird.

Am Zylinderkolben 7 ist eine Schubstange in Form eines Pleuels 2 drehbar angebracht. An seinem anderen Ende ist das Pleuel 2 mit einer Kurbelwelle 5 drehbar verbunden. Durch diese Anordnung wird die lineare Auf- und Abbewegung des Zylinderkolbens 7 in eine umlaufende Rotationsbewegung der Kurbelwelle 5 umgewandelt.

Am Pleuel 2 sind in dessen Längsrichtung ein kapazitiver Kraftsensor in Form eines Dehnungssensors 1 und ein Meßwertübertrager 4 in Mikrosystemtechnik aufgebracht. Durch den Dehnungssensor 1 wird eine Dehnung des Pleuels 2 entlang seiner Längsachse gemessen, und dieses Meßsignal an den Meßwertübertrager 4 weitergeleitet. Durch den hier in Oberflächenwellentechnik ausgeführten Meßwertübertrager 4 werden die Meßdaten in regelmäßigen Abständen, typischerweise 300/s, an einen entfernt angebrachten Transponder 8 berührungslos übertragen. Der Transponder 8 sendet Mikrowellensignale an den Meßwertübertrager 4 auf einer Frequenz und empfängt vom diesem die Meßsignale auf einer anderen Frequenz.

Aus dem Dehnungswert ergibt sich zusammen mit dem Querschnitt und dem Elastizitätsmodul E der Schubstange 2 und ein Wert der Stangenkraft Fp. Gleichzeitig mit dem Wert der Stangenkraft Fp wird mittels eines Winkelgebers 3 ein Kurbelwinkel φ der Kurbelwelle 5 bestimmt. Daraus erhält man mit dem Kurbelradius' r und der Schubstangenlänge 1 den Schubstangenwinkel β, und weiter die Kolbenkraft Fk nach

$$Fk = Fp \cdot \cos \beta . \qquad (1)$$

Aus Kenntnis der Massenkraft F0:

$$F0 = dv/dt \cdot Mpl , \qquad (2)$$

mit dv/dt der Beschleunigung der Schubstange 2, erhältlich aus Drehzahlbeschleunigung und Winkelposition, und Mpl der Masse zwischen Meßstelle und Zylinderkolben 7, folgt, daß der Brennraumdruck pB nach

$$pB = Fs / Ak = (Fk + F0) / Ak, \qquad (3),$$

mit Ak der Kolbenfläche des Zylinderkolbens 7, bestimmbar ist. Auch läßt sich das Drehmoment Md an der Kurbelwelle 5 errechnen nach:

$$Md = Ft \cdot r = Fp \sin(\varphi + \beta) \cdot r. \qquad (4).$$

Dabei ist es nicht notwendig, den Winkel $\varphi$ direkt zu messen, sondern es können auch andere Winkel, z. B. der Schubstangenwinkel $\beta$ oder $\gamma$, bestimmt werden, aus denen sich bei gegebener Geometrie aus Abstands- und Winkelbetrachtungen der Winkel $\varphi$ ergibt.

Auch kann man nun in einfacher Weise bestimmen:

- das momentane Gesamtmoment durch Addition aller Kupplungsmomente,
- das zylinderspezifische Motorverlustmoment (Reibung + Drosselverlust) durch Bestimmung des Kupplungsmoments während der Schubabschaltphase,
- das Gesamtmotorverlustmoment durch Addition aller zylinderspezifischen Motorverlustmomente,
- die Berechnung des zylinderspezifischen Gasmomentes (indiziertes Moment durch Verbrennung) durch Addition von Kupplungsmoment und Motorverlustmoment,
- den Druckverlauf zur Erkennung von Aussetzern, für Laufruheregelung sowie für Verbrennungsschwerpunktregelung etc.

Damit sind mittels des Kurbeltriebsensors nahezu alle Steuergrößen direkt ableitbar, welcher aus heutiger Sicht für eine Motorsteuerung von besonderer Bedeutung sind, insbesondere für CVT("Continuous Variable Transmission")-Getriebe.

Beispielsweise kann aus dem Motorverlustmoment die Adaption des Verlustmoment-Modells durchgeführt werden. Aus dem induzierten Moment kann das Momentenmodell adaptiert werden. Aus dem gemessenen Kupplungsmoment kann eine Sicherheitsüberwachung beim EGas-System durchgeführt werden.

Figur 2 zeigt als Skizze das zu Figur 1 korrespondierende Kräfte- und Abstandsdiagramm.

Auf das Pleuel 2 wird eine Kolbenkraft Fk bzw. eine Stangenkraft Fp nach Gl. (1) ausgeübt. Das Pleuel 2 steht in einem Schubstangenwinkel $\beta$ relativ zur hier gewählten Senkrechten als Nulldurchgang. Das Pleuel 2 hängt drehbar mit der Kurbelwelle 5 mit einem Kurbelradius r zusammen. Die Kurbelwelle 5 weist einen Kurbelwinkel $\varphi$ um ihre Drehachse auf. In dieser Figur ist eine Momentaufnahme dargestellt, bei der die Kurbelwelle 5 waagerecht liegt.

Die Stangenkraft Fp läßt sich aufspalten in eine Tangentialkomponente Ft = Fp cos $\gamma$, welche senkrecht zur Kurbelwelle 5 steht sowie einer entsprechenden Normalkomponente Fn. Das Drehmoment Md auf die Kurbelwelle 5 läßt sich daraus nach Gl. (4) berechnen. Bei dieser Momentaufnahme sind die Winkel $\beta$ und $\gamma$ gleich. Wie schon oben ausgeführt, lassen sich außer dem Drehmoment M auch andere Steuerungsgrößen ableiten.

Somit läßt sich mittels eines Kraftsensors am Pleuel 2 eine Auswirkung einer chemisch-mechanischen Energieumwandlung in einfacher und unkritischer Weise unmittelbar und zylinderselektiv erfassen, und es können nahezu alle wichtigen Eingangsgrößen für eine Motorsteuerung abgeleitet werden.

**Patentansprüche**

1. Kurbeltriebsensor, aufweisend

   - mindestens einen an einer Schubstange (2) angebrachten Kraftsensor (1) zur Messung einer Stangenkraft (Fp),
   - mindestens einen Meßwertübertrager (4), mittels dessen ein Meßsignal des Kraftsensors (1) berührungslos übertragbar ist,
   - einen Winkelgeber (3) zur Bestimmung eines Kurbelwinkels ($\varphi$) einer mit der Schubstange (2) verbundenen Kurbel (5).

2. Kurbeltriebsensor nach Anspruch 1, bei dem der mindestens eine Kraftsensor (1) ein Dehnungssensor ist.

3. Kurbeltriebsensor nach Anspruch 2, bei dem der Dehnungssensor ein piezoresistiver oder kapazitiver Dehnungssensor oder ein Oberflächenwellen-Bauelement ist.

4. Kurbeltriebsensor nach Anspruch 2, bei dem der Dehnungssensor in Form eines aufgedampften Hochtemperatur-Dehnmessstreifens vorliegt.

5. Kurbeltriebsensor nach Anspruch 1, bei dem

der mindestens eine Kraftsensor (1) ein Verformungssensor ist.

6. Kurbeltriebsensor nach Anspruch 5, bei dem der Verformungssensor ein kapazitiver Verformungssensor ist.

7. Kurbeltriebsensor nach einem der vorhergehenden Ansprüche, bei dem der Kraftsensor (1) als Mikrosystem ausgeführt ist.

8. Kurbeltriebsensor nach einem der vorhergehenden Ansprüche, der Meßwertübertrager (4) mittels eines Energieübertrags von Mikrowellen betreibbar ist.

9. Kurbeltriebsensor nach Anspruch 8, bei dem eine Sendefrequenz und eine Empfangsfrequenz des Meßwertübertragers (4) unterschiedlich ist.

10. Kurbeltriebsensor nach einem der Ansprüche 1 bis 7, bei dem der Meßwertübertrager (4) energetisch autonom betreibbar ist.

11. Verwendung des Kurbeltriebsensors an einem Verbrennungsmotor, bei der aus korrespondierenden Werten der Stangenkraft (Fp) und des Kurbelwinkels (β) Steuergrößen zur Überwachung und/oder Steuerung des Verbrennungsmotors und/oder des Antriebsstrangs abgeleitet werden.

12. Verwendung nach Anspruch 11, bei der als eine erste Steuergröße ein Drehmoment (Md) auf die Kurbel (5) bestimmt wird.

13. Verwendung nach einem der Ansprüche 11 oder 12, bei der als eine zweite Steuergröße eine zylinderspezifische Kraft (Fs) bestimmt wird.

14. Verwendung nach einem der Ansprüche 11 bis 13, bei der als eine dritte Steuergröße ein Verlauf eines Drucks (pB) in einem Brennraum (6) bestimmt wird.

FIG 2

FIG 1